# EUROPÄISCHE PATENTANMELDUNG

(11) **EP 1 209 867 A2**
(43) Veröffentlichungstag der Anmeldung: **29.05.2002**
(21) Anmeldenummer: 01125221.0
(22) Anmeldetag: 24.10.2001
(51) Int. Cl.: H04L 25/14

(54) **Verfahren zur Übetragung eines anisochronen Datenstroms auf einer Mehrzahl isochroner Übertragungsstrecke**

(30) Priorität: 22.11.2000 DE 10057933
(71) Anmelder: BECKER GmbH, 76307 Karlsbad (DE)
(72) Erfinder: Stiegler, Andreas, 76275 Ettlingen (DE); Schöpp, Harald, 76272 Ettlingen (DE); Bähren, Frank, 76137 Karlsruhe (DE)
(74) Vertreter: Patentanwälte Westphal, Mussgnug & Partner

(57) **Zusammenfassung**

Um einen anisochronen Datenstroms auf einer eine Mehrzahl von Kanälen aufweisenden isochronen Übertragungsstrecke zu übertragen, wird vor Beginn der Übertragung eine solche Zahl von Kanälen reserviert, daß die Summe der Übertragungskapazitäten der reservierten Kanäle die Bandbreite des asynchronen Datenstroms soeben überschreitet. Im Laufe der Übertragung werden aus den Daten des anisochronen Datenstroms Pakete gebildet, jedes Paket wird unter Nutzung aller reservierten Kanäle gesendet, und nach dem Senden eines Pakets werden die Kanäle mit am Empfänger zu verwerfenden Fülldaten aufgefüllt, bis wieder ausreichend Daten zur Verfügung stehen, um mit dem Senden des nächsten Pakets zu beginnen.

## Beschreibung

Die Erfindung betrifft ein Verfahren, das auf einer isochronen, d.h. mit einem vorgegebenen Systemtakt betriebenen digitalen Übertragungsstrecke die Übertragung von anisochronen Daten erlaubt, d.h. von Daten, denen eine andere Frequenz als die Arbeitsfrequenz der Übertragungsstrecke entspricht.

Bei der Übertragung von Daten, denen eine bestimmte Frequenz für ihre Weiterverarbeitung oder Wiedergabe zugeordnet ist, wie insbesondere Audiodaten kann sich das Problem ergeben, daß sie auf einer getakteten Übertragungsstrecke übertragen werden müssen, deren Arbeitsfrequenz von dieser zugeordneten Frequenz abweicht. Eine Möglichkeit, anisochrone Daten auf einer solchen Strecke zu übertragen ist, eine Wandlung der zugeordneten Frequenz vorzunehmen, um einen intermediären Datenstrom mit der Arbeitsfrequenz der Übertragungsstrecke zu erhalten, diesen zu übertragen und anschließend eine erneute Wandlung der Frequenz vorzunehmen. Eine solche Frequenzwandlung kann z.B. bei einem Datenstrom, der ein Audiosignal darstellt und dessen zugeordnete Frequenz die Abtastfrequenz des Audiosignals ist, dadurch erfolgen, daß der digitale Audiodatenstrom analogisiert und mit der Arbeitsfrequenz der Übertragungsstrecke abgetastet und redigitalisiert wird. Nach der Übertragung kann eine entgegengesetzte Wandlung am übertragenen intermediären Datenstrom vorgenommen werden.

Eine solche Vorgehensweise ist jedoch nicht nur aufgrund der an beiden Enden der Übertragungsstrecke erforderlichen Ratenwandler aufwendig und kostspielig, sie ist auch in Folge der unvermeidlichen Ungenauigkeiten bei der Analogisierung und anschließenden erneuten Digitalisierung mit Qualitätsverlusten am Audiosignal bzw. allgemein mit Informationsverlusten verbunden. Falls die Arbeitsfrequenz der Übertragungsstrecke kleiner ist als die ursprüngliche Abtastfrequenz, so ist selbst dann, wenn Analogisierung und Digitalisierung als ideal fehlerfrei angenommen werden, ein Informationssverlust unvermeidbar, weil hochfrequente Spektralanteile bei der Übertragung unterdrückt werden.

Aufgabe der vorliegenden Erfindung ist, ein Verfahren anzugeben, daß die transparente Übertragung eines anisochronen Datenstroms auf einer isochronen Übertragungsstrecke ohne Qualitätsverlust erlaubt, unabhängig von den Werten der Arbeitsfrequenz der Übertragungsstrecke bzw. der dem Datenstrom zugeordneten Frequenz.

Die Aufgabe wird gelöst durch ein Verfahren, bei dem vor Beginn der Übertragung eine solche Zahl von Kanälen der Übertragungsstrecke für die Übertragung reserviert wird, daß die Summe der Übertragungskapazitäten der reservierten Kanäle die Bandbreite des asynchronen Datenstroms soeben überschreitet. Mit anderen Worten: Es werden exakt so viele Kanäle reserviert, wie erforderlich sind, um über mehr Übertragungskapazität zu verfügen als der Bandbreite des asynchronen Datenstroms entspricht. Im Laufe der Übertragung werden aus den Daten des anisochronen Datenstroms Pakete gebildet. Jedes dieser Pakete wird unter Nutzung aller reservierten Kanäle gesendet, wobei nach dem Senden eines Pakets die Kanäle jeweils so lange mit Fülldaten aufgefüllt werden, bis am Sender wieder genügend Daten gesammelt worden sind, um ein weiteres Paket ohne Unterbrechung senden zu können. Die Fülldaten werden am Empfänger verworfen, um den ursprünglichen anisochronen Datenstrom wieder herzustellen.

Um den Empfänger die Unterscheidung zwischen Nutzdaten und Fülldaten im von der Übertragungsstrecke empfangenen Datenstrom zu erleichtern, wird vorzugsweise zu Beginn des Sendens jedes Pakets ein Synchronisierungsmuster übertragen. Wenn der Empfänger dieses Synchronisierungsmuster erkennt, "weiß" er, daß die darauffolgenden Daten Nutzdaten sein müssen.

Die Zahl der in jedem Paket übertragenen Nutzdaten ist vorzugsweise fest. Der Empfänger kann somit nach Empfang dieser festen Datenmenge Empfang und Verarbeitung des von der Übertragungsstrecke kommenden Datenstroms solange unterbrechen, bis durch ein Synchronisierungsmuster die erneute Übertragung von Nutzdaten angekündigt wird.

Diese Merkmale erlauben beliebige, auch nicht kommensurable Verhältnisse zwischen der dem Datenstrom zugeordneten Frequenz und der Arbeitsfrequenz der Übertragungsstrecke. Derartige Frequenzverhältnisse können zwar dazu führen, daß die Menge an zwischen zwei aufeinanderfolgenden Nutzdatenblöcken übertragenen Fülldaten variiert, da diese Fülldaten aber vom Empfänger schlicht ignoriert werden können, verkompliziert dies nicht die Wiederherstellung des ursprünglichen anisochronen Datenstroms auf Seiten des Empfängers.

Vorzugsweise sind die Kanäle der Übertragungsstrecke Zeitmultiplexkanäle. Dem Sender stehen so zum Senden der Daten zyklisch abwechselnd Zeitschlitze der verschiedenen Kanäle zur Verfügung, so daß er von einer externen Quelle erhaltene Datenwörter eines Pakets in Einheiten mit der Breite der Kanäle zerlegen und die so erhaltenen Einheiten der Reihe nach im jeweils nächsten freien Zeitschlitz eines reservierten Kanals senden kann.

Wie bereits oben angegeben, eignet sich das Verfahren insbesondere zur Übertragung von Audiodatenströmen. Dabei kann es auf einen einzelnen Audiokanal, den linken bzw. rechten Kanal eines Stereosignals, etc. angewendet werden. Insbesondere im Falle eines Stereosignals oder anderer mehrere Kanäle umfassender Audiosignale kann es für die Übertragung ökonomischer sein, den Audiodatenstrom durch Verschachteln von Daten der mehreren Audiokanäle zu bilden.

Als Übertragungsstrecke wird bevorzugt ein MOST-Netzwerk eingesetzt. Ein solches Netzwerk arbeitet vorzugsweise mit einer Frequenz von 44,1 MHz, was der Abtastfrequenz einer herkömmlichen CD entspricht. Ein DVD-Abspielgerät hingegen liefert einen Datenstrom, dessen einzelne Audiokanäle jeweils eine Abtastrate von 48 kHz aufweisen. Das Verfahren eignet sich daher besonders zur Übertragung eines von einem DVD-Abspielgerät gelieferten anisochronen Datenstroms auf einem MOST-Netzwerk, wobei der anisochrone Datenstrom ein einzelner Audiokanal des DVD-Abspielgeräts mit einer Abtastfrequenz von 48 MHz sein kann oder aus mehreren Audiokanälen des Abspielgeräts zusammengesetzt sein kann, wobei ihm im letzteren Fall eine verallgemeinerte "Abtastfrequenz" entspricht, die ein ganzzahliges Vielfaches von 48 MHz ist.

Weitere Merkmale und Vorteile ergeben sich aus der nachfolgenden Beschreibung von Ausführungsbeispielen mit Bezug auf die beigefügten Figuren. Es zeigen:
- Fig. 1: ein Blockdiagramm eines MOST-Netzwerks mit einer daran angeschlossenen Quelle bzw. Senke für anisochrone Daten;
- Fig. 2 und 3: veranschaulichen die Übertragung der anisochronen Daten auf dem MOST-Netzwerk.

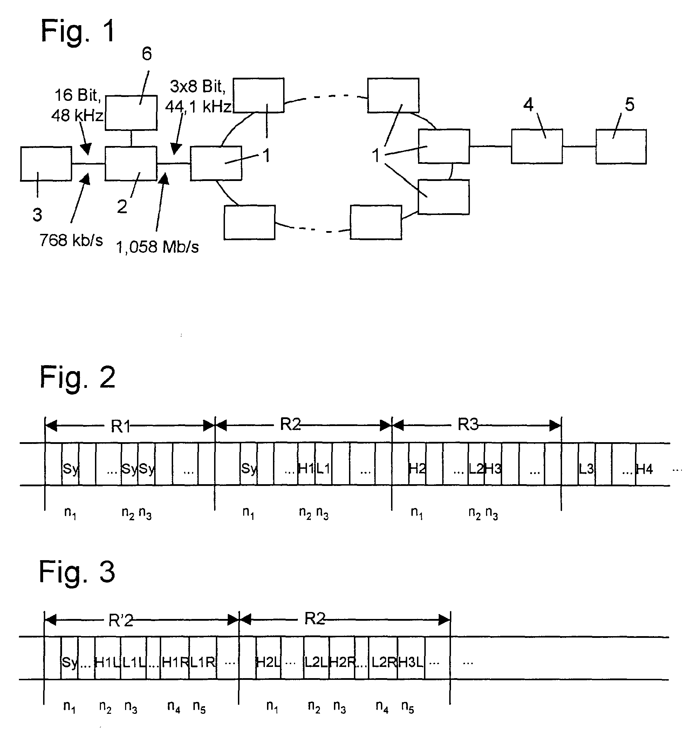

Ein MOST-Netzwerk wie das in Fig. 1 gezeigte umfaßt üblicherweise eine Mehrzahl von MOST-Schnittstellen 1, die miteinander zu einer Ringstruktur verbunden sind. An eine der Schnittstellen 1 ist ein Sender 2 angeschlossen, der Daten von einer Quelle, z.B. einem DVD-Abspielgerät 3 mit einer Wortbreite von 16 Bit und einer Wortfrequenz von 48 kHz empfängt. Die Übertragungsrate vom Abspielgerät 3 zum Sender 2 beträgt somit 768 kb/s.

Auf dem MOST-Netzwerk zwischen den Schnittstellen 1 werden Daten mit einer Wortbreite von 8 Bit übertragen. Die Übertragungszeit auf dem Netzwerk ist in Rahmen mit einer Wiederholfrequenz von 44,1 kHz unterteilt, wobei jeder Rahmen eine Vielzahl n von Zeitschlitzen umfaßt, in denen jeweils ein 8 Bit breites Datenwort übertragbar ist. Die sich zyklisch wiederholenden n Zeitschlitze bilden n Kanäle mit einer Übertragungskapazität von jeweils 8 Bit x 44,1 kHz, entsprechend 352,8 kHz.

An eine zweite Schnittstelle 1 ist ein Empfänger 4 für die vom Sender 2 auf den MOST-Netzwerk in Umlauf gebrachten Daten angeschlossen, der eine Rückumwandlung in einen Datenstrom mit dem ursprünglich von dem DVD-Abspielgerät 3 gelieferten Format vornimmt und den so umgewandelten Datenstrom an eine Senke 5 wie etwa einen Verstärker mit angeschlossenem Lautsprecher weitergibt. Die Arbeitsweise des Senders 2 bzw. des Empfängers 4 wird im folgenden beschrieben, wobei auf die Figuren 2 und 3 Bezug genommen wird.

Um einen Datenstrom mit einer Bandbreite von 768 kb/s, wie ihn das DVD-Abspielgerät 3 liefert, auf dem MOST-Netzwerk übertragen zu können, müssen vorab drei Kanäle reserviert werden. Es steht dann eine Übertragungskapazität von 3 x 352,8 kb/s = 1,0584 Mb/s zur Verfügung.

Bevor der Sender 2 beginnt, Daten an die ihm zugeordnete Schnittstelle 1 auszugeben, sammelt er vom Abspielgerät 3 empfangene Daten zunächst in einem FIFO-Zwischenspeicher 6, bis dort eine vorgegebene Zahl m von Datenwörtern zusammengekommen ist. Wie groß diese Zahl ist, hängt ab von der Größe der Pakete, in denen die Daten anschließend auf den MOST-Netzwerk übertragen werden sollen. Sobald die nötige Datenmenge im Zwischenspeicher vorhanden ist, beginnt der Sender 2, auf ihm zugeteilten Kanälen n₁, n₂, n₃ ein Synchronisierungsmuster zu senden, in Fig. 2 mit Sy bezeichnet. Wenn der Empfänger 4 das Synchronisierungsmuster empfängt, so erkennt er daran, daß in der Folge ein Paket von M Datenwörtern übertragen werden wird, die er verarbeiten und an die Senke 5 weitergeben muß.

Im Anschluß an das Synchronisationsmuster, hier beginnend mit dem Zeitschlitz n₂ des Rahmens R2, beginnt der Sender 2 mit dem Senden des Inhalts des Zwischenspeichers 6, hier erst mit dem höherwertigen Byte H1, anschließend im Zeitschlitz n₃ mit dem niederwertigen Byte L1 des ersten im Zwischenspeicher 6 gespeicherten, 16 Bit breiten Datenworts. Im Rahmen R3 folgen Bytes H2, L2 des zweiten und H3 des dritten Datenworts.

Während auf diese Weise der Sender den Inhalt des Zwischenspeichers 6 abarbeitet, liefert das Abspielgerät 3 Daten nach, die ebenfalls in den Zwischenspeicher 6 eingetragen werden, bevor sie gesendet werden. Da die Sende-Datenrate von 1,0584 kb/s höher ist als die, mit der das Abspielgerät 3 Daten nachliefert, nimmt im Laufe des Sendens die Zahl der im Zwischenspeicher 6 enthaltenen Datenwörter ab. Die Zahl m ist allerdings in Abhängigkeit von den Datenraten des Abspielgeräts 3, des Senders 2 und der Paketgröße M so gewählt, daß der Zwischenspeicher nicht leer wird, bevor nicht ein vollständiges Paket von M Datenwörtern auf dem MOST-Netzwerk übertragen worden ist. Sobald diese Zahl M von Datenwörtern erreicht ist, gibt der Sender 2 so lange Fülldaten, z.B. Bytes mit Wert 0, an das MOST-Netzwerk aus, bis der Zwischenspeicher 6 wieder m Datenwörter enthält, also ein ausreichender Datenvorrat vorhanden ist, um ein weiteres Datenpaket unterbrechungsfrei übertragen zu können.

Nachdem der Empfänger 4 das Synchronisationsmuster empfangen hat, gibt er die im Anschluß daran empfangenen M Datenwörter umformatiert in Datenwörter von 16 Bit Breite mit einer Frequenz von 48 kHz, also im gleichen Format, wie sie von dem Abspielgerät 3 geliefert wurden, an die Senke 5 aus. Nachdem er die M Datenwörter empfangen hat, ignoriert er auf den für die Übertragung reservierten Kanälen nachfolgend übertragene Daten so lange, bis er das nächste Synchronisierungsmuster empfängt.

Auf diese Weise wird der vom Abspielgerät 3 gelieferte Datenstrom originalgetreu wieder hergestellt.

Wie man leicht sieht, ist die Ausnutzung der Übertragungskapazität des MOST-Netzwerks bei dem oben beschriebenen Beispiel noch verbesserungsfähig; das Verhältnis der Datenraten der Quelle und des Senders ist derart, daß etwa während eines Viertels der Zeit Fülldaten auf dem Netzwerk übertragen werden. Eine effizientere Ausnutzung der Übertragungskapazität läßt sich erreichen, wenn der vom Abspielgerät 3 gelieferte anisochrone Datenstrom sich aus mehreren Audiokanälen zusammensetzt, von denen jeder aus 16 Bit breiten Datenwörtern mit einer Abtastfrequenz von 48 kHz besteht.

Als Beispiel hierfür ist in Fig. 3 die Übertragung eines Stereosignals betrachtet. In diesem Fall beträgt die Gesamtdatenrate des Abspielgeräts 3 2 x 768 = 1536 kb/s; um diesen anisochronen Datenstrom auf dem MOST-Netzwerk zu übertragen, müssen fünf Kanäle entsprechend einer Übertragungsrate von 1674 kb/s reserviert werden.

Nachdem im Puffer ein Vorrat von m Datenwörtern versammelt ist (wobei der Zahlenwert von m hier ein anderer ist als im Falle von Fig. 2) beginnt der Sender 2 im Zeitschlitz n₂ des Rahmens R'2 mit der Nutzdatenübertragung. In den Zeitschlitzen n₂ , n₃ sendet er jeweils das höherwertige und niederwertige Byte H1L, L1L des ersten Datenworts des linken Kanals des Stereosignals; in den Zeitschlitzen n₄, n₅ die entsprechenden Bytes H1R, L1R des ersten Datenworts des rechten Kanals. Im darauffolgenden Rahmen R'3 folgen die zweiten Datenwörter der zwei Kanäle und, im Zeitschlitz n₅, das höherwertige Byte H3L des dritten Worts des linken Kanals, usw.. Wie bereits mit Bezug auf Fig. 2 beschrieben, sendet der Sender 2 so lange, bis die vorgegebene Zahl M von Datenwörtern eines Pakets erreicht worden ist, und im Anschluß daran sendet er so lange Fülldaten, bis der Zwischenspeicher 6 wieder den benötigten Datenbestand von m Datenwörtern erreicht hat. Sobald dies der Fall ist, wird ein neues Synchronisationsmuster gesendet, und der Zyklus wiederholt sich.

Bei dieser Variante ist der Anteil der Zeit, in dem Fülldaten im MOST-Netzwerk übertragen werden, kleiner als 10 %; die Übertragungskapazität des Netzwerks wird also wesentlich effektiver ausgenutzt.

Die vorliegende Erfindung ist zwar im Hinblick auf ein DVD-Abspielgerät als Datenquelle und ein MOST-Netzwerk als Übertragungsstrecke beschrieben worden, es liegt jedoch auf der Hand, daß sie auch auf beliebige andere Datenquellen und andere synchrone Übertragungsstrecken anwendbar ist.

## Patentansprüche

1. Verfahren zur Übertragung eines anisochronen Datenstroms auf einer eine Mehrzahl von Kanälen aufweisenden isochronen Übertragungsstrecke, mit den Schritten:
- vor Beginn der Übertragung Reservieren einer solchen Zahl von Kanälen (n₁, n₂, ..., n₅) für die Übertragung, daß die Summe der Übertragungskapazitäten der reservierten Kanäle die Bandbreite des asynchronen Datenstroms soeben überschreitet,
- im Laufe der Übertragung Bilden von Paketen aus den Daten des anisochronen Datenstroms,
- Senden jedes Pakets unter Nutzung aller reservierten Kanäle (n₁, n₂, ..., n₅),
- nach dem Senden eines Pakets Auffüllen der Kanäle (n₁, n₂, ..., n₅) mit am Empfänger (4) zu verwerfenden Fülldaten, bis ausreichend Daten zur Verfügung stehen, um mit dem Senden des nächsten Pakets zu beginnen.

2. Verfahren nach Anspruch 1, **dadurch gekennzeichnet, daß** zu Beginn des Sendens jedes Pakets ein Synchronisierungsmuster (Sy) übertragen wird.

3. Verfahren nach einem der vorhergehenden Ansprüche, **dadurch gekennzeichnet, daß** alle Pakete eine gleiche Datenmenge enthalten.

4. Verfahren nach einem der vorhergehenden Ansprüche, **dadurch gekennzeichnet, daß** die Kanäle (n₁, n₂, ..., n₅) Zeitmultiplexkanäle sind, daß die Datenwörter eines Pakets in Einheiten (H1, L1, H2, L2, ...; H1L, L1L, H1R, L1R, ...) mit der Breite der Kanäle zerlegt werden und die so erhaltenen Einheiten der Reihe im jeweils nächsten freien Zeitschlitz eines reservierten Kanals (n₁, n₂, ..., n₅) gesendet werden.

5. Verfahren nach einem der vorhergehenden Ansprüche, **dadurch gekennzeichnet, daß** der anisochrone Datenstrom ein Audiodatenstrom ist.

6. Verfahren nach Anspruch 5, **dadurch gekennzeichnet, daß** der Audiodatenstrom einen einzelnen Audiokanal umfaßt.

7. Verfahren nach Anspruch 5, **dadurch gekennzeichnet, daß** der Audiodatenstrom durch Verschachteln von Daten von wenigstens zwei Audiokanälen gebildet wird.

8. Verfahren nach einem der vorhergehenden Ansprüche, **dadurch gekennzeichnet, daß** die Übertragungsstrecke ein MOST-Netzwerk ist.

9. Verfahren nach Anspruch 8, **dadurch gekennzeichnet, daß** das MOST-Netzwerk mit einer Frequenz von 44,1 MHz arbeitet, und daß der anisochrone Datenstrom eine Frequenz von 48 MHz oder einem ganzzahligen Vielfachen davon aufweist.

10. Verfahren nach einem der vorhergehenden Ansprüche, **dadurch gekennzeichnet, daß** der anisochrone Datenstrom von einem DVD-Abspielgerät geliefert wird.
